# EUROPÄISCHE PATENTSCHRIFT

(11) **EP 1 514 858 B1**
(45) Veröffentlichungstag und Bekanntmachung des Hinweises auf die Patenterteilung: **06.07.2011**
(21) Anmeldenummer: 04020605.4
(22) Anmeldetag: 31.08.2004
(51) Int. Cl.: C04B 35/83, F16D 69/02, C04B 35/80, C04B 35/573

(54) **Zylinderringförmige Körper aus mit Kurzfasern verstärktem keramischen Verbundmaterial**
Cylindrical body made of fiber reinforced cramic composite
Corps cylindrique en composite céramique renforcé par des fibres

(30) Priorität: 08.09.2003 DE 10341734
(43) Veröffentlichungstag der Anmeldung: 16.03.2005
(73) Patentinhaber: AUDI AG, 85045 Ingolstadt (DE)
(72) Erfinder: Bauer, Moritz, 86153 Augsburg (DE); Huber, Dieter, 86154 Augsburg (DE); Sommer, Arno, 86399 Bobingen (DE); Straub, Dunja, 86609 Donauwörth (DE)
(74) Vertreter: Deckers, Hellmuth Alexander

(56) Entgegenhaltungen:
- EP-A- 1 323 944
- DE-A1- 2 731 813
- DE-A1- 4 235 589
- GB-A- 1 309 147

## Beschreibung

Die Erfindung betrifft zylinderringförmige Körper aus mit Kurzfasern verstärktem keramischen Verbundmaterial. Insbesondere betrifft die Erfindung faserverstärkte keramische Bremsscheiben in Form von Zylinderringscheiben, in denen als Verstärkungsfasern Kurzfasern eingesetzt sind.

Als Kurzfasern werden hier solche Fasern bezeichnet, deren mittlere Faserlänge maximal 10 % des Radius des Außenmantels der Kreisringscheibe beträgt. Bevorzugt beträgt die Länge von Kurzfasern 0,1 mm bis 50 mm.

Es ist bekannt, Langfasern zur Verstärkung von keramischen Bremsscheiben einzusetzen. Dies ist beispielsweise in der EP-A 1 124 071 beschrieben; dort werden zufällig orientierte Kohlenstoff-Kurzfasern in Kombination mit verstärkenden Langfasern in faserverstärkten keramischen Werkstoffen eingesetzt, wobei die Langfasern sich so um den gesamten Körper erstrecken, daß sie die Rißfortpflanzung verhindern. Dabei sind die verstärkenden Langfasern in Form von einer Vielzahl von Bündeln eingesetzt, die in vorgegebener Richtung arrangiert sind, überkreuzt, parallel gelegt, in Form von Netzen oder verdrillt.

In der EP-A 0 926 111 werden Faserverbundmaterialien beschrieben, die durch Infiltration von flüssigem Silicium in einen mit Kohlenstoffasern verstärkten Kohlenstoffkörper und nachfolgende Reaktion des Kohlenstoffs mit dem Silicium unter Bildung von Siliciumcarbid zugänglich sind, wobei die Kohlenstoffasern als Lagen von parallel gelegten Endlosfasern ("UD-Tapes") oder Geweben aufeinander laminiert werden und ein kompaktes Fasergebilde ergeben, das vor der Imprägnierung mit Silicium carbonisiert wird (unter Ausschluß von Oxidationsmitteln erhitzt unter Bildung von Kohlenstoff aus dem die Fasern verbindenden Material). Dieses Dokument betrifft ausschließlich garnhaltige Verbundmaterialien, wobei Garne hier aus Endlosfasern (Filamentgarne) gebildet sind.

Es ist ebenfalls bekannt, Kurzfasern als Verstärkungsfasern in keramischen Bremsscheiben einzusetzen, beispielsweise aus der DE-A 197 11 829. Hier werden Kurzfasern aus Kohlenstoff mit einer Länge von 1 mm bis 30 mm mit kohlenstoffhaltigen Füllmitteln wie Ruß oder Graphit und thermisch aushärtbaren Bindemitteln in einem Mischer oder Kneter vermischt und zu einem Grünling gepreßt, der nach der Pyrolyse mit flüssigem Silicium infiltriert wird. Eine Ausrichtung der Kurzfasern ist nicht erwähnt.

Aus dem Dokument DE 42 35 589 A1 ist ein Reibbelagkörper bekannt, der aus einem Vliesmaterialstreifen hergestellt ist, wobei der Vliesstreifen entweder direkt zu einem spiralförmigen Wickel gewickelt wird, oder der Vliesstreifen um die Streifenlängsachse zu einem als Garn bezeichneten Gebilde gerollt oder verdrillt wird, und ein Rohkörper aus diesem Gebilde gewickelt wird. Das Vliesmaterial kann Duroplastkomponenten enthalten, die zur späteren Verfestigung des Reibbelagkörpers erforderlich sind. Ein keramisches Verbundmaterial, dessen Matrix Siliciumcarbid enthält, mit verstärkenden Kurzfasern aus Kohlenstoff wird nicht offenbart.

Das Dokument DE 27 31 813 A1 offenbart einen ringförmigen Reibbelag, der aus einer faserhaltigen Paste als Strang geformt und anschließend gepreßt und gehärtet wird. Das Bindemittel ist ein Phenol-Formaldehyd-Harz oder ein Melamin-Formaldehyd-Harz, es handelt sich also um faserverstärkte Duroplaste, und nicht um keramische Materialien.

Im Dokument GB 1,309,147 werden Bremsbeläge beschrieben, die mit Glasfasern verstärkt sind, wobei diese Glasfasern auf die Reibfläche in einem bestimmten Winkel auftreffen. Es werden weder Fasern aus Kohlenstoff noch mit diesen verstärkte keramische Verbundmaterialien beschrieben, die Siliciumcarbid enthalten. Eine tangentiale Ausrichtung der Fasern ist nicht offenbart.

Das Dokument WO 2003/104 674 betrifft ein tribologisches Faserverbundbauteil insbesondere in Form einer Brems- oder Kupplungsscheibe, die unter Verwendung einer sogenannten TFP-Vorform hergestellt werden. Diese Vorformen sind gebildet aus Fasern, die in gewünschter Orientierung auf einem Grundmaterial wie textilen Halbzeugen oder Folien aufgenäht sind. Die aus mehreren Vorformen gebildete Gesamtstruktur wird in einem Harzbad mit Phenolharz imprägniert, gepreßt, pyrolysiert und schließlich siliciert.

Bei rotierenden zylinderringförmigen Körpern aus keramischen Werkstoffen ist eine Versagensmöglichkeit das Bersten oder Zerbrechen bei einer bestimmten hohen Drehzahl, wobei die durch die Zentrifugalkräfte induzierten Spannungen die Zugfestigkeit der keramischen Körper übertreffen und zu einem katastrophalen Bruch führen. Durch Einbringen von Langfasern gemäß dem oben beschriebenen Stand der Technik ist es zwar möglich, die Zugfestigkeit in Faserrichtung zu erhöhen, insbesondere durch in Umfangsrichtung abgelegte Langfaserbündel; diese Methode ist jedoch mit erhöhtem Aufwand in der Fertigung verbunden. Durch die unterschiedlichen thermischen Ausdehnungskoeffizienten von Verstärkungsfasern und Matrix kann es darüber hinaus zu Spannungen und damit zu Schwachstellen in dem Verbundwerkstoff kommen.

Es besteht daher die Aufgabe, zylinderringförmige Körper aus faserverstärkten keramischen Werkstoffen bereitzustellen; die auch bei hohen Drehzahlen nicht bersten, und die die genannten Nachteile der Langfaserverstärkung vermeiden.

Bei den Untersuchungen, die der vorliegenden Erfindung zugrunde lagen, wurde gefunden, daß durch eine bevorzugte Ausrichtung von Kurzfasern (Verstärkungsfasern mit einer gewichtsmittleren Faserlänge von 0,1 mm bis 50 mm) in tangentialer Richtung in zylinderringförmigen Körpern eine drastische Erhöhung der Berstdrehzahl (derjenigen Drehzahl, bei der 50 % aller untersuchten Rotationskörper durch katastrophalen Bruch versagen) erreicht werden kann.

Die genannte Aufgabe wird daher gelöst durch ein Verfahren gemäß Anspruch 1. Die als Verstärkungsfasern geeigneten Kurzfasern liegen infolge ihrer hohen Biegesteifigkeit bei den angegebenen gewichtsmittleren Faserlängen in gestreckter (also in nicht gekrümmter) Form vor. Als "bevorzugt ausgerichtet" werden im Rahmen der Erfindung solche Orientierungsverteilungen bezeichnet, in denen mehr als 50 % aller Fasern einen Winkel von 45° oder weniger mit der Vorzugsrichtung einschließen, nämlich der Richtung der Tangente des Zylinderrings am Mittelpunkt der Faser.

Als "zylinderringförmig" werden Körper bezeichnet, die durch Drehen eines Rechtecks um eine nicht in seinem Inneren liegende, parallel zu einer Seite des Rechtecks ausgerichteten Drehachse hervorgehen.

Es ist dabei nicht erforderlich, daß in allen beliebig herausgegriffenen Volumenelementen der zylinderringförmigen Körper eine derartige präferentielle Faserausrichtung verwirklicht ist, es genügt vielmehr, daß in einem Volumenanteil von mindestens 20 %, bevorzugt mindestens 35 %, und besonders bevorzugt mindestens 50 % der zylinderringförmigen Körper eine derartige präferentielle Ausrichtung verwirklicht ist.

Teilt man den zylinderringförmigen Körper in einzelne konzentrische Zylinderringe oder Segmente derartiger Zylinderringe auf, so genügt es ebenfalls bereits, mindestens in einem solchen Anteil der Zylinderringe oder deren Segmenten, der einem Volumenanteil von 20 % entspricht, eine derartige präferentielle Orientierung in tangentialer Richtung zu haben. Als besonders wirksam hat sich dabei erwiesen, daß im innersten Zylinderring, dessen Dicke in radialer Richtung durch seinen Innenradius ri und seinen Außenradius ra gegeben ist, mehr als 50 %, bevorzugt mehr als 60 %, und besonders bevorzugt mehr als 65 % der Fasern in tangentialer Richtung ausgerichtet sind, wobei die Dicke dieses innersten Zylinderrings ra - ri mindestens ein Zehntel der Dicke des gesamten zylinderringförmigen Körpers in radialer Richtung Ra - ri ist, wobei Ra der äußere Radius des zylinderringförmigen Körpers ist. Ganz besonders günstige Eigenschaften haben sich ergeben, wenn der Anteil der in tangentialer Richtung orientierten Fasern mindestens 80 % beträgt.

Besonders wirksam ist der Verstärkungseffekt ausgeprägt, wenn zumindest im inneren Drittel der zylinderringförmigen Körper eine derartige präferentielle Faserausrichtung vorliegt. Als inneres Drittel wird dabei eine Zylinderringzone bezeichnet, deren innerer Radius ri der Radius ri der zylinderringförmigen Körper selbst ist, und deren äußerer Radius ra3 sich ergibt durch die Beziehung ra3 = ri + (Ra - ri) / 3.

Bevorzugt betrifft die Erfindung zylinderringförmige Körper aus faserverstärkten keramischen Werkstoffen, deren Verstärkungsfasern Kohlenstoffasern sind, und in denen die Matrix im wesentlichen aus Kohlenstoff besteht (sog. "CFC"-Werkstoffe, englisch "CFRC", carbon fibre reinforced carbon") oder Siliciumcarbid sowie gegebenenfalls geringe Anteile von elementaren Silicium und Anteile von elementarem Kohlenstoff enthält. Derartige Werkstoffe werden gemeinhin als "C/SiC" bezeichnet.

Die erfindungsgemäße präferentielle Orientierung der Kurzfasern läßt sich auf verschiedene Weisen erreichen. Beispielsweise ist es möglich, die Fertigung so anzupassen, daß eine Masse enthaltend Kurzfasern aus Kohlenstoff und einen carbonisierbaren Binder (einen Binder, beispielsweise ein duroplastisches Harz, das beim Erhitzen unter Ausschluß von oxydierenden Agenzien zersetzt wird unter Zurücklassen von einem Anteil von mindestens 10 % seiner Ausgangsmasse) so in eine Form zur Bildung der erfindungsgemäßen zylinderringförmigen Körper eingefüllt wird, daß die Kurzfasern durch die Strömung des Materials beim Befüllen dieser Form in Gestalt eines Zylinderrings zumindest partiell orientiert werden. Die Orientierung läßt sich in diesem Fall in besonders günstiger Weise durch Förderung des Materials mit einer Kolbenpresse oder einer kontinuierlich arbeitenden Schneckenpresse (Extruder) erzielen.

Es ist ebenfalls möglich, die Befüllung zunächst im wesentlichen ohne Orientierung durchzuführen, wobei nach dem Einbringen der faserhaltigen Masse in die Form diese Masse mit einem kammartigen Werkzeug überstrichen wird, wobei die Zinken des Werkzeugs in die faserhaltige Masse eintauchen und bei dem Überstreichen eine Orientierung im tangentialer Richtung bewirken. Bevorzugt wird diese Orientierung so durchgeführt, daß jeweils nach dem Einfüllen einer Lage der faserhaltigen Masse diese in der Form mit dem kammartigen Werkzeug unter Eintauchen überstrichen wird. Dabei wird die Orientierung umso besser, je dünner die einzelnen Lagen ausgeführt werden und je öfter die Ausrichtung mit Hilfe des kammartigen Werkszeugs vorgenommen wird.

Für die durch die Berstdrehzahl bestimmte Festigkeit der zylinderringförmigen Körper hat es sich als vorteilhaft herausgestellt, wenn ein Anteil von mindestens 10 %, bevorzugt mindestens 15 % der Kurzfasern einen Winkel von weniger als 45° mit dem Radius der zylinderringförmigen Körper an der betreffende Stelle einschließt; mit anderen Worten, daß ein Anteil von mindestens 10 %, bevorzugt von mindestens 15 % in bevorzugt radialer Richtung angeordnet ist.

Bevorzugt kann man die zylinderringförmigen Körper als Brems- oder Kupplungsscheibe verwenden.

Die Erfindung wird durch die nachstehenden Beispiele erläutert.

### Beispiel 1

Es wurde eine Mischung aus Kohlenstoff-Kurzfasern mit einer gewichtsmittleren Faserlänge von 30 mm und einem Phenolharzbinder hergestellt. Die Mischung wurde in eine zylinderförmige Form eingefüllt, wobei die Füllung der Höhe nach in vier Schichten unterteilt wurde, und jede der Schichten nach dem Einfüllen in die Form mit einem Kamm, der in radialer Richtung fixiert wurde, unter Drehen der Form um ihren Mittelpunkt orientiert wurde. Die Mischung wurde in der Form verpreßt. Zum Vergleich wurden Formen mit derselben Mischung, jedoch ohne Orientierung befüllt; diese Mischungen wurde ebenfalls in der Form verpreßt. Dabei wurden jeweils 5 Probekörper hergestellt, die anschließend bei einer Temperatur von 900 bis 1100 °C gebrannt wurden. Aus diesen Probekörpern wurden zur Bestimmung der Orientierung Meßkörper zur Bestimmung der Biegefestigkeit, des Zug-Elastizitätsmoduls, der Zugdehnung und des thermischen Ausdehnungskoeffizienten (gemessen im Bereich von 20 °C bis 200 °C) jeweils gemäß den einschlägigen DIN-Vorschriften gemessen, wobei die Meßkörper jeweils in radialer und in tangentialer Richtung herauspräpariert wurden. Dabei ergaben sich als Mittelwert aus jeweils 5 Messungen die folgende Werte:

| | Biegefestigkeit in MPa | | Zugmodul in GPa | | thermischer Ausdehnungskoeffizient in µm/(m·K) | |
|---|---|---|---|---|---|---|
| | radial | tangential | radial | tangential | radial | tangential |
| orientiert | 4,1 | 11,0 | 4,72 | 9,8 | 0,13 | 0,34 |
| unorientiert | 9,1 | 10,6 | 7,64 | 9,2 | 0,16 | 0,24 |

Es ist aus den Werten deutlich zu erkennen, daß eine bevorzugte Faserorientierung senkrecht zum Radius der Zylinderringscheibe an der betreffenden Stelle, also in tangentialer oder Umfangsrichtung vorliegt.

### Beispiel 2

Es wurden zylinderringförmige Scheiben mit einem Außendurchmesser von 350 mm gemäß dem Vorgehen in Beispiel 1 jeweils mit und ohne Orientierung hergestellt. Diese wurden unter vermindertem Druck bei ca. 1500 °C mit flüssigem Silicium infiltriert, wobei sich der durch das Carbonisieren des Phenolharzbinders gebildete Kohlenstoff nahezu vollständig zu Siliciumcarbid umsetzte. An diesen zylinderringförmigen Scheiben wurde die Berstdrehzahl bestimmt.

Bei den Scheiben ohne Orientierung ergab sich eine Berstdrehzahl von 4999 min⁻¹, bei den Scheiben mit Faserorientierung in tangentialer Richtung wurde eine Berstdrehzahl von 5242 min⁻¹ gemessen. Die statistische Irrtumswahrscheinlichkeit zwischen den beiden Versuchsserien betrug weniger als 0,8%.

## Patentansprüche

1. Verfahren zur Herstellung von zylinderringförmigen Körpern aus mit Kurzfasern aus Kohlenstoff verstärktem keramischen Verbundmaterial mit einer Siliciumcarbid enthaltenden Matrix, **dadurch gekennzeichnet, daß** während der Herstellung des Grünkörpers für das keramische Verbundmaterial die verstärkenden Kurzfasern bevorzugt tangential ausgerichtet werden.

2. Verfahren nach Anspruch 1, **dadurch gekennzeichnet, daß** die Orientierung derart erfolgt, daß mehr als 50 % aller Fasern einen Winkel von 45° oder weniger mit der Richtung der Tangente des Zylinderrings an dem Mittelpunkt der Fasern einschließen.

3. Verfahren nach Anspruch 1, **dadurch gekennzeichnet, daß** die Orientierung derart erfolgt, daß in einem Volumenanteil von mindestens 20 % des zylinderringförmigen Körpers die verstärkenden Kurzfasern bevorzugt tangential ausgerichtet sind.

4. Verfahren nach Anspruch 1, **dadurch gekennzeichnet, daß** die Orientierung derart erfolgt, daß in einem Volumenanteil von mindestens 20 % des zylinderringförmigen Körpers die verstärkenden Kurzfasern bevorzugt tangential ausgerichtet sind, wobei sich dieser Volumenanteil ergibt aus dem Anteil von einzelnen konzentrischen Zylinderringen, in denen die Ausrichtung der Kurzfasern bevorzugt tangential ist.

5. Verfahren nach Anspruch 4, **dadurch gekennzeichnet, daß** die Orientierung derart erfolgt, daß mindestens in dem innersten Zylinderring die Ausrichtung der Kurzfasern bevorzugt tangential ist.

6. Verfahren gemäß Anspruch 1, bei dem die Ausrichtung der Fasern durch Überstreichen der in eine zylinderringförmige Form zur Bildung der zylinderringförmigen Körper gefüllten Masse enthaltend Kurzfasern aus Kohlenstoff und einen carbonisierbaren Binder mit einem kammartigen Werkzeug mit Zinken vorgenommen wird, wobei die Zinken dieses Werkzeugs in die faserhaltige Masse eintauchen und so eine Orientierung in tangentialer Richtung bewirken.

7. Verfahren nach Anspruch 1, **dadurch gekennzeichnet, daß** die Kurzfasern durch die Strömung des Materials beim Befüllen einer Form in Gestalt eines Zylinderrings durch Förderung des Materials mit einer Kolbenpresse oder einer kontinuierlich arbeitenden Schneckenpresse orientiert werden.

8. Verwendung von zylinderringförmigen Körpern als Brems- oder Kupplungsscheibe, wobei die zylinderringförmigen Körper aus mit Kurzfasern aus Kohlenstoff verstärktem keramischen Verbundmaterial mit einer Siliciumcarbid enthaltenden Matrix bestehen, zu deren Herstellung Grünkörper eingesetzt werden, deren verstärkende Kurzfasern bevorzugt tangential ausgerichtet werden nach dem Verfahren einer oder mehrerer der Ansprüche 1 bis 7.

## Claims

1. A process for producing cylinder-ring-shaped bodies made of ceramic composite material, reinforced with short carbon fibers, with a matrix comprising silicon carbide, wherein the reinforcing short fibers are preferably oriented tangentially during the production of the green body for the ceramic composite material.

2. The process as claimed in claim 1, wherein the orientation is effected in such a manner that more than 50 % of all fibers include an angle of 45° or less with the direction of the tangent of the cylinder ring at the center of the fibers.

3. The process as claimed in claim 1, wherein the orientation is effected in such a manner that the reinforcing short fibers are preferably oriented tangentially in a volume fraction of at least 20 % of the cylinder-ring-shaped body.

4. The process as claimed in claim 1, wherein the orientation is effected in such a manner that the reinforcing short fibers are preferably oriented tangentially in a volume fraction of at least 20 % of the cylinder-ring-shaped body, said volume fraction arising from the fraction of individual concentric cylinder rings in which the short fibers are preferably oriented tangentially.

5. The process as claimed in claim 4, wherein the orientation is effected in such a manner that the short fibers are preferably oriented tangentially at least in the innermost cylinder ring.

6. The process as claimed in claim 1, in which the fibers are oriented by passing a comb-like tool with tines over the mass, comprising short carbon fibers and a carbonizable binder, which is introduced into a cylinder-ring-shaped mold for forming the cylinder-ring-shaped bodies, the tines of said tool dipping into the fiber-containing mass and thereby bringing about orientation in the tangential direction.

7. The process as claimed in claim 1, wherein the short fibers are oriented by the flow of the material during filling of a mold in the form of a cylinder ring by transporting the material with a ram extruder or a continuously operating screw extruder.

8. The use of cylinder-ring-shaped bodies as a brake or clutch disk, wherein the cylinder-ring-shaped bodies consist of ceramic composite material, reinforced with short carbon fibers, with a matrix comprising silicon carbide, which is produced using green bodies of which the reinforcing short fibers are preferably oriented tangentially by the process as claimed in one or more of claims 1 to 7.

## Revendications

1. Procédé de préparation de corps cylindriques en composite céramique renforcé par des fibres courtes en carbone, avec une matrice contenant du carbure de silicium, **caractérisé en ce que** pendant la préparation du corps vert pour le composite céramique, les fibres courtes de renforcement sont de préférence dirigées de manière tangentielle.

2. Procédé selon la revendication 1, **caractérisé en ce que** l'orientation est réalisée de telle sorte que plus de 50 % de toutes les fibres ont un angle de 45° ou moins avec la direction de la tangente de l'anneau cylindrique au point central de la fibre.

3. Procédé selon la revendication 1, **caractérisé en ce que** l'orientation est réalisée de telle sorte que dans une fraction volumique d'au moins 20 % du corps cylindrique, les fibres courtes de renforcement sont dirigées de préférence de manière tangentielle.

4. Procédé selon la revendication 1, **caractérisé en ce que** l'orientation est réalisée de telle sorte que dans une fraction volumique d'au moins 20 % du corps cylindrique, les fibres courtes de renforcement sont dirigées de préférence, de manière tangentielle, où cette fraction volumique résulte de la proportion d'anneaux cylindriques concentriques individuels, pour lesquels la direction des fibres courtes est de préférence tangentielle.

5. Procédé selon la revendication 4, **caractérisé en ce que** l'orientation est réalisée de telle sorte qu'au moins dans l'anneau cylindrique le plus interne, la direction des fibres courtes est de préférence tangentielle.

6. Procédé selon la revendication 1, dans lequel on procède à l'orientation des fibres par passage d'un outil de type peigne avec des dents dans la masse contenant les fibres courtes en carbone et un liant carbonisable, se trouvant dans un moule cylindrique pour la formation du corps cylindrique, où les dents de l'outil sont immergées dans la masse contenant les fibres et ainsi, réalisent une orientation en direction tangentielle.

7. Procédé selon la revendication 1, **caractérisé en ce que** les fibres courtes sont orientées par écoulement du matériau lors du remplissage d'un moule en forme d'anneau cylindrique, par compression du matériau avec une presse à piston ou une presse à vis travaillant en continu.

8. Utilisation de corps cylindriques comme disque de frein ou d'embrayage, où le corps cylindrique consiste en un composite céramique renforcé par des fibres courtes en carbone, avec une matrice contenant du carbure de silicium, pour la préparation duquel on met en oeuvre des corps verts, dont les fibres courtes de renforcement sont de préférence dirigées de manière tangentielle selon le procédé selon l'une ou plusieurs des revendications 1 à 7.
